Europäisches Patentamt

**European Patent Office**

Office européen des brevets

(19)

(11) Publication number: **0 109 814**
**B1**

(12) **EUROPEAN PATENT SPECIFICATION**

(45) Date of publication of patent specification: **03.02.88**

(21) Application number: **83306934.7**

(22) Date of filing: **14.11.83**

(51) Int. Cl.⁴: **C 04 B 37/02, F 02 F 3/14,**
**F 02 F 3/00, F 01 D 5/28**

(54) **Joining silicon nitride to metals.**

(30) Priority: **17.11.82 GB 8232821**

(43) Date of publication of application:
**30.05.84 Bulletin 84/22**

(45) Publication of the grant of the patent:
**03.02.88 Bulletin 88/05**

(84) Designated Contracting States:
**DE FR IT SE**

(56) References cited:
**GB-A-1 588 516**
**GB-A-2 027 518**
**US-A-4 214 906**

**Kirk-Othmer Encyclopedia of Chemical**
**Technology, 3rd Ed., vol. 12, p. 454+455**
**CHEMICAL ABSTRACTS, vol. 97, no. 22,**
**November 1982, p. 301, no. 187021a,**
**Columbus, Ohio, US;**

(73) Proprietor: **AE PLC**
**Cawston House Cawston**
**Rugby Warwickshire CV22 7SB (GB)**

(72) Inventor: **Moore, John Collard**
**69 Daventry Road**
**Barby Nr. Rugby Warwickshire (GB)**

(74) Representative: **Knott, Stephen Gilbert et al**
**MATHISEN, MACARA & CO. The Coach House**
**6-8 Swakeleys Road**
**Ickenham Uxbridge Middlesex UB10 8BZ (GB)**

Courier Press, Leamington Spa, England.

# Description

The invention relates to the joining of silicon nitride to metals and to articles produced by such joining.

Silicon nitride is more heat-resistant than many metals such as the aluminium and aluminium alloys used in the manufacture of articles such as pistons for internal combustion engines, and the nickel and cobalt alloys used in the manufacture of blades for gas turbine engines, both of which work in a hot environment. Silicon nitride is comparatively strong at high temperatures, having a modulus of rupture of about 206 kPa at temperatures up to 1350°C. There are several forms of silicon nitride which can be so used such as reaction bonded silicon nitride, in which a silicon powder is compacted and reacted with nitrogen at high temperature, or hot pressed silicon nitride, which is a silicon nitride powder pressed in graphite dies at high temperature and bonded together with a glass flux, or sintered silicon nitride, which is a silicon nitride powder heated in the presence of bonding agent such as yttria and a magnesia so that the particles stick together, or a compound known as sialon, which is silicon nitride with oxygen and aluminium.

In many articles, however, such as pistons and gas turbine blade assemblies, it is not possible to make the whole article of silicon nitride because of the loads imposed on the article. For this reason, it is desirable to join silicon nitride to metals. It has not, however, so far been possible to establish such a joint by conventional welding or brazing processes because silicon nitride does not "wet" (i.e. it will not carry a liquid film on its surface) and so it is not possible to coat it with conventional fluxes or other metal compounds which allow welding or brazing of the silicon nitride to the metal. Silicon nitride will, under certain circumstances, wet with highly reactive brazes based on titanium and chromium, but these require the use of a high vacuum furnace which is expensive to operate, produces an expansion mismatch and can give generally poor quality joints.

According to a first aspect of the invention, there is provided a method of joining silicon nitride to a metal or metal alloy and comprising bonding to a surface of the silicon nitride, firstly a layer of aluminium oxide or an alumina silica compound or magnesia or mullite and secondly a layer of a ceramic metal (intermetallic compound) and then joining the ceramic metal (intermetallic compound) layer to a surface of the metal or metal alloy by a welding or brazing process.

According to a second aspect of the invention, there is provided a method of manufacturing a piston having a crown end thereof or a part of the crown end thereof formed from silicon nitride and the remainder of the piston formed from a metal or a metal alloy and comprising joining the silicon nitride part to the metal or metal alloy portion by a method according to the first aspect of the invention.

According to a third aspect of the invention, there is provided a method of manufacturing a blade for a gas turbine engine and comprising forming an aerofoil portion of the blade of silicon nitride and forming a root portion of the blade of a metal or a metal alloy and then joining the aerofoil portion to the root portion by a method according to the first aspect of the invention.

The following is a more detailed description of two embodiments of the invention, by way of example, reference being made to the accompanying drawings in which:—

Figure 1 is a cross-section of a portion of a piston for an internal combustion engine, and

Figure 2 is a schematic perspective view of a part of a blade for a gas turbine engine.

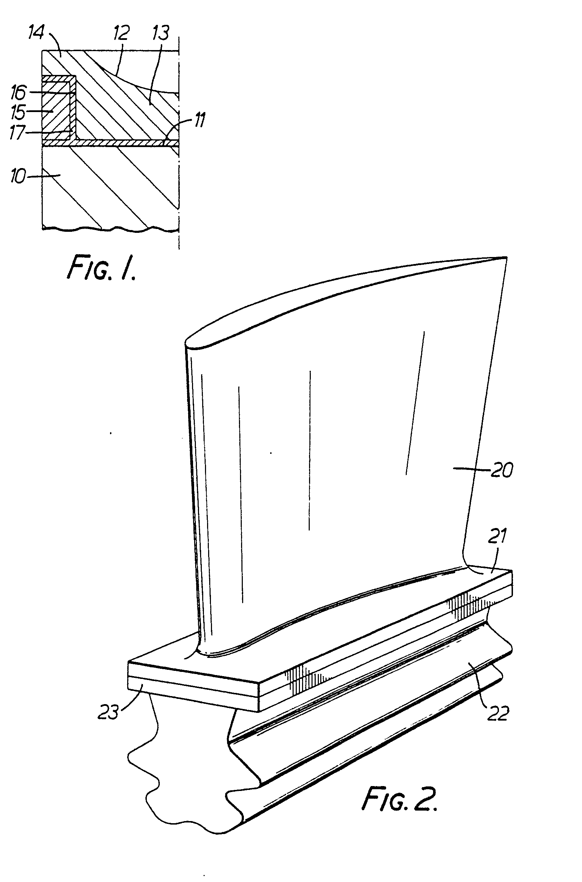

Referring first to Figure 1, the piston for an internal combustion engine comprises a body portion 10 which is, for example, cast from aluminium or an aluminium alloy or a magnesium alloy. The end of the body has a flat generally circular surface 11.

The piston also includes a combustion bowl 12 formed in a crown end member 13 of silicon nitride ($Si_3N_4$) in any suitable form, such as reaction bonded silcon nitride, in which a silicon powder is compacted and reacted with nitrogen at high temperature, or hot pressed silicon nitride, which is a silicon nitride powder pressed in graphite dies at high temperature and bonded together with a glass flux, or sintered silicon nitride, which is a silicon nitride powder heated in the presence of a bonding agent such as yttria and magnesia so that the particles stick together, or a compound known as sialon, which is silicon nitride with oxygen and aluminium. The member 13 is provided with a peripheral flange 14 which has the same external diameter as the external diameter of the body 10. An annular reinforcement member 15 of a ferrous material is provided around the silicon nitride member 13 beneath the flange 14 and has an external diameter which is substantially the same as the external diameters of the flange 14 and the piston body 10.

The silicon nitride member 13 is connected to the other parts as follows.

First, the cylindrical surface 16 of the silicon nitride member 13 is sprayed with a layer of aluminium oxide ($Al_2O_3$). This may be done by using a plasma spray process or by any other suitable form of spray. In alternative embodiments, alumina silica compounds or magnesia or mullite ($Al_6Si_2O_{13}$) may be used.

The use of a plasma a spray process ensures that the aluminium oxide is bonded firmly to the surface of the silicon nitride member 13.

Next, a layer of ceramic metal (intermetallic compound) such as nickel aluminide is sprayed onto the coating of aluminium oxide. Once again, a plasma spray process may be used or any other suitable form of spray process to ensure the formation of a firmly bonded layer.

Since nickel aluminide can be welded or brazed to metals using conventional such processes, the coated silicon nitride member 13 is then brazed to the reinforcement 15 by a conventional brazing process using a brazing paste to form a connection 17 therebetween. The assembled member 13 and the reinforcement 15 are then brazed to the upper surface 11 of the piston body 10 in a similar fashion.

Subsequently, a ring groove or grooves are machined in the reinforcement 15 to produce a finished piston.

In this way, a piston is formed which has a crown end and a combustion bowl 12 formed from silicon nitride which can readily resist the temperatures (of, say, up to 800°C) which may be found in the cylinders of internal combustion engines, particularly Diesel cycle engines with a heat-insulated piston. The joining method described above with reference to Figure 1 provides a connection between the silicon nitride member 11, the body 10 and the reinforcement 15 which is strong enough to take all loads imposed on the piston.

The problem of differing coefficient of thermal expansion between the silicon nitride member 13 and the piston body 10 and the reinforcement 15 is overcome by the fact that the aluminium oxide (or alumina silica compound or magnesia or mullite, where used) has a coefficient of thermal expansion intermediate the coefficients of thermal expansion of the member 13 and the body and reinforcement 10, 15, while the nickel aluminide has a coefficient of thermal expansion intermediate the coefficients of thermal expansion of the aluminium oxide and the body 10 and reinforcement 15. Thus there is a succession of materials with graded coefficients of thermal expansion which overcomes the problem of direct joints between materials having widely differing coefficients of thermal expansion.

It will be appreciated that a welding process can be used in place of the brazing process described above.

Referring next to Figure 2, the blade comprises an aerofoil portion 20 which is formed from a silicon nitride of any of the types described above with reference to Figure 1. The aerofoil portion 20 is provided with a rectangular base 12 which forms part of the gas shroud platform and has a flat undersurface. The blade also includes a fir tree root 22 which is formed from any suitable metal or metal alloy such as a nickel or cobalt alloy and having a rectangular upper surface 23 forming the remainder of the gas shroud platform and corresponding to the flat undersurface of the base 21 of the aerofoil portion 20.

The two surfaces are joined using the technique described above with reference to Figure 1. The undersurface of the silicon nitride aerofoil portion 20 is sprayed with a layer of aluminium oxide of an alumina silica compound, or magnesia or mullite. Onto this layer is sprayed a ceramic metal (intermetallic compound) such as nickel aluminide which is, in turn, welded or brazed to the upper surface 23 of the root 22.

There is thus formed a composite gas turbine blade in which the silicon nitride aerofoil 20 is well able to withstand the hot conditions encountered in the turbine in operation, while the metal or metal alloy root 22 is well able to bear the stresses placed on the blade. This avoids the stressing problems encountered in the roots of blades formed entirely from silicon nitride. The graded coefficients of thermal expansion of the layers overcome the problem of differential expansion of the aerofoil and the root.

It will be appreciated that composite silicon nitride/metal or metal alloy parts, joined as described above, could be used for form other gas turbine parts which encounter the hot turbine gases and are stressed in use. For example, composite turbine shrouds and other hot gas path components could be made in this way. Indeed, the method described can be used whenever it is required to join silicon nitride to a metal or metal alloy.

**Claims**

1. A method of joining silicon nitride to a metal or metal alloy and characterised in that the method comprises bonding to a surface of the silicon nitride, firstly a layer of aluminium oxide or an alumina silica compound or magnesia or mullite and secondly a layer of a ceramic metal (intermetallic compound), and then joining the ceramic metal (intermetallic compound) layer to a surface of the metal or metal alloy by a welding or brazing process.

2. A method according to claim 1 characterised in that the metal or metal alloy has a coefficient of thermal expansion which is greater than the coefficient of thermal expansion of silicon nitride, and in that the method comprises selecting the material of the first layer to have a coefficient of thermal expansion intermediate the coefficients of thermal expansion of the silicon nitride and the metal or metal alloy, and selecting the material of the second layer to have a coefficient of thermal expansion intermediate the coefficients of thermal expansion of the first layer and the metal or metal alloy.

3. A method according to claim 1 or claim 2, characterised in that the ceramic metal (intermetallic compound) is nickel aluminide.

4. A method according to any one of claims 1 to 3, characterised in that at least one of the first and second layers is formed by a plasma spray process.

5. A method of manufacturing a piston of the kind having a crown end thereof or a part of the crown end thereof formed from silicon nitride and the remainder of the piston formed from a metal or a metal alloy characterised in that the method comprises joining the silicon nitride part to the metal or metal alloy portion by a method according to any one of claims 1 to 4.

6. A method according to claim 5, characterised in that the silicon nitride part defines a combustion bowl of the piston.

7. A method of manufacturing a blade for a gas turbine engine and characterised in that the method comprises forming an aerofoil portion of the blade of silicon nitride and forming a root portion of the blade of a metal or a metal alloy and then joining the aerofoil portion to the root portion by a method according to any one of claims 1 to 4.

**Patentansprüche**

1. Verfahren zum Verbinden von Siliciumnitrid mit einem Metall oder einer Metallegierung,
dadurch gekennzeichnet,
daß das Verfahren umfaßt
— ein Binden zunächst einer Schicht aus Aluminiumoxid oder einer Aluminiumoxid-Silika-Verbindung oder aus Magnesiumoxid oder aus Mullit an eine Oberfläche des Siliciumnitrids und
— zweitens einer Schicht aus einem keramischen Metall, worauf die Schicht aus dem keramischen Metall mit der Oberfläche des Metalles oder der Metallegierung mit Hilfe eines Schweiß- oder Lötverfahrens verbunden wird.

2. Verfahren nach Anspruch 1, dadurch gekennzeichnet, daß das Metall oder die Metallegierung einen thermischen Ausdehnungenkoeffizienten aufweist, welcher größer ist als der thermische Ausdehnungskoeffizient von Siliciumnitrid, und daß das Verfahren umfaßt das Auswählen des Werkstoffes der ersten Schicht derart daß es einen Wärmedehnungskoeffizienten aufweist, welcher zwischen den Wärmedehnungskoeffizienten des Siliciumnitrides und des Metalls oder der Metallegierung liegt, und daß das Auswählen des Werkstoffs für die zweite Schicht so erfolgt, daß dessen Wärmedehnungskoeffizient zwischen den Wärmedehnungskoeffizienten der ersten Schicht und des Metalls oder der Metallegierung liegt.

3. Verfahren nach Anspruch 1 oder 2, dadurch gekennzeichnet, daß das keramische Metall Nickelaluminid ist.

4. Verfahren nach einem der Ansprüche 1 bis 3, dadurch gekennzeichnet, daß wenigstens eine der beiden Schichten mit Hilfe eines Plasmasprüh-Verfahrens ausgebildet wird.

5. Verfahren zum Herstellen eines Kolbens, bei welchem der Kolbenboden oder einen Teil des Kolbenbodens aus Siliciumnitrid besteht, während der Kolben im übrigen aus einem Metall oder einer Metallegierung besteht, dadurch gekennzeichnet, daß das Verfahren ein Verbinden des Siliciumnitridteils mit dem aus Metall oder einer Metallegierung bestehenden Teil mit Hilfe eines Verfahrens gemäß einem der Ansprüche 1 bis 4 umfaßt.

6. Verfahren nach Anspruch 5, dadurch gekennzeichnet, daß das aus Siliciumnitrid bestehende Teil eine Verbrennungsmulde des Kolbens definiert.

7. Verfahren zum Herstellen einer Schaufel für einen Gasturbinenmotor, dadurch gekennzeichnet, daß das Verfahren umfaßt das Ausbilden eines Schaufelabschnittes der Turbinenschaufel aus Siliciumnitrid und das Ausbilden eines Fußabschnittes der Turbinenschaufel aus einem Metall oder einer Metallegierung, worauf der Schaufelabschnitt mit dem Fußabschnitt mittels eines Verfahrens entsprechend einem der Ansprüche 1 bis 4 verbunden wird.

**Revendications**

1. Procédé pour assembler du nitrure de silicium à un métal ou alliage métallique, caractérisé en ce qu'il consiste à fixer sur une surface du nitrure de silicium, premièrement, une couche d'oxyde d'aluminium ou d'un composé alumine-silice ou de magnésie ou de mullite et, deuxièmement, une couche d'un métal céramique (composé intermétallique), et à assembler ensuite la couche de métal céramique (composé intermétallique) à une surface du métal ou de l'alliage métallique par une opération de soudage ou brasage.

2. Procédé selon la revendication 1, caractérisé en ce que le métal ou alliage métallique possède un coefficient de dilatation thermique qui est plus grand que le coefficient de dilatation thermique du nitrure de silicium et en ce que le procédé consiste à choisir la matière de la première couche de manière qu'elle possède un coefficient de dilatation thermique intermédiaire entre les coefficients de dilatation thermiques du nitrure de silicium et du métal ou de l'alliage métallique, et à choisir la matière de la deuxième couche de manière qu'elle possède un coefficient de dilatation thermique intermédiaire entre les coefficients de dilatation thermique de la première couche et du métal ou de l'alliage métallique.

3. Procédé selon la revendication 1, ou la revendication 2, caractérisé en ce que le métal céramique (composé intermétallique) est l'aluminure de nickel.

4. Procédé selon l'une quelconque des revendications 1 à 3, caractérisé en ce qu'au moins une des première et deuxième couches est formée par une opération de pulvérisation au plasma.

5. Procédé de fabrication d'un piston du type dont une extrémité de tête, ou une partie de l'extrémité de tête, est formée de nitrure de silicium tandis que le reste du piston est formée d'un métal ou alliage métallique, caractérisée en ce que le procédé consiste à assembler la partie en nitrure de silicium à la partie en métal ou en alliage métallique par un procédé selon une quelconque des revendications 1 à 4.

6. Procédé selon la revendication 5, caractérisé en ce que la partie en nitrure de silicium définit une chambre de combustion du piston.

7. Procédé de fabrication d'une aube pour un moteur à turbine à gaz, caractérisé en ce que le procédé consiste à former une partie plan aérodynamique de l'aube en nitrure de silicium et à former une partie pied de l'aube en un métal ou alliage métallique, et à assembler ensuite la partie plan aérodynamique à la partie pied par un procédé selon l'une quelconque des revendications 1 à 4.

*Fig. I.*

*Fig. 2.*